# EUROPÄISCHE PATENTANMELDUNG

(11) **EP 0 935 113 A1**
(43) Veröffentlichungstag der Anmeldung: **11.08.1999**
(21) Anmeldenummer: 99102174.2
(22) Anmeldetag: 04.02.1999
(51) Int. Cl.: F27D 3/12, F23M 5/04, F27D 1/14, F27D 1/12

(54) **Verankerungsvorrichtung für Stahlrohraggregate abdeckende Steinplatten**

(30) Priorität: 04.02.1998 DE 19804311
(71) Anmelder: Jünger + Gräter GmbH Feuerfestbau, 68723 Schwetzingen (DE)
(72) Erfinder: Schuhmacher, Stefan, 68789 St. Leon-Rot (DE); Schuhmacher, Uwe, Dr., 67433 Neustadt/W (DE)
(74) Vertreter: Zinngrebe, Horst, Dr.rer.nat.

(57) **Zusammenfassung**

Verankerungsvorrichtung für Stahlrohraggregate abdeckende Steinplatten, bestehend aus einem an der die Stahlrohre (91,93) verbindenden Rohrflosse (92) befestigbaren Halteteil (1) und einem das Halteteil durchsetzenden, in die Steinplatten eingreifenden Haltebolzen (12). Damit die Verankerungsvorrichtung wesentlich einfacher, montagefreundlicher sowie für einen universellen Einsatz geeignet wird, ist vorgesehen, daß das Halteteil aus einem an der Rohrflosse befestigbaren senkrechten Steg (11) und einer an dem der Rohrflosse fernen Ende des senkrechten Stegs angeordneten und den Haltebolzen (12) aufnehmenden waagrechten Lasche (10) besteht, wobei der senkrechte Steg und die waagrechte Lasche biegefest miteinander ausgebildet oder verbunden sind.

## Beschreibung

Die Erfindung betrifft eine Verankerungsvorrichtung für Stahlrohraggregate abdeckende Steinplatten, bestehend aus einem an der die Stahlrohre verbindenden Rohrflosse befestigbaren Halteteil und einem das Halteteil durchsetzenden, in die Steinplatten eingreifenden Haltebolzen.

Es ist bekannt, Industrieöfen, Kessel und Ofenräume mit einer feuerfesten Wandkonstruktion auszustatten, um den Verbrennungsraum von den dort vorhandenen Rohraggregaten zu trennen. Der Schutz der Rohraggregate gegenüber dem Verbrennungsraum erfolgt entweder durch Abmauerung oder durch vorgehängte Steinplatten. Die Anwendung von vorgehängten Steinplatten hat sich im Industrieofenbau weitgehend durchgesetzt.

In dem Dokument DE 40 07 662 C1 ist eine Verankerungsvorrichtung zum Beihalten von Steinplatten an die Stahlrohre beschrieben, welche aus einer trapezförmigen, horizontal an die Rohrflossen angeschweißten Platte und einem diese durchsetzenden Haltebolzen besteht. Diese Vorrichtung dient zur ergänzenden Sicherung der mit der Stahlrohrwand vermörtelten Steinplatten.

In dem Dokument DE 41 08 754 C2 ist eine von einem Haltebolzen durchsetzte Stützlasche für mit der Rohrwand vermörtelte Steinplatten erläutert, deren zylindrisches Fußteil mit der Rohrwand verschweißt ist. Diese Vorrichtung hat den Nachteil einer erhöhten Korrosionsgefahr durch Eintritt aggressiver Rauchgase aus dem Verbrennungsraum durch eine rissig oder porös gewordene Verfügung der Steinplatten.

Der Erfindung liegt die Aufgabe zugrunde, die eingangs genannte Verankerungsvorrichtung zu verbessern.

Diese Aufgabe wird erfindungsgemäß dadurch gelöst, daß die Verankerungsvorrichtung der eingangs genannten Gattung ein Halteteil besitzt, das einen an der Rohrflosse befestigbaren senkrechten Steg und eine an dem der Rohrflosse fernen Ende des senkrechten Stegs vorgesehene und den Haltebolzen aufnehmende waagrechte Lasche aufweist. Das Halteteil setzt sich somit aus einem senkrechten Teil zur Verankerung und einem waagrechten Teil zur Fixierung der Steinplatte zusammen, wobei das Halteteil entweder aus zwei Ausgangsteilen bestehen kann, die durch Schweißen, Löten oder Kaltverformen miteinander verbunden sind, oder aus einem Teil gefertigt ist. Die Fixierung an der Rohrwand erfolgt durch Handschweißung oder Bolzenschweißtechnik. Durch die Fixierung des Halteteils an der Rohrwand mit einer Verankerungsfläche, deren senkrechte Höhe größer ausgelegt ist als deren horizontale Breite, wird das Flächenträgheitsmoment zur Erhöhung der Tragfähigkeit wesentlich verbessert. Damit kann die erfindungsgemäße Vorrichtung die jeweils zugehörige(n) Steinplatte(n) im wesentlichen alleine tragen, was die Ausbildung einer Hinterlüftung zwischen Steinplattenwand und Rohrwand erlaubt. Diese stellt sicher, daß die genannten Verbrennungsgase aus dem Ofenraum durch eventuell schadhafte Verfugungen nicht an die Verankerungsvorrichtung gelangen können, welche somit vor Korrosion geschützt ist.

Bei einer zweckmäßigen Ausgestaltung der Erfindung ist vorgesehen, daß der senkrechte Steg und die waagrechte Lasche durch Verklemmung oder Verkeilung zusammengefügt sind. Dadurch kann die Montagezeit verringert werden. Insbesondere dann, wenn die Höhe des senkrechten Stegs größer ist als dessen Breite und die Höhe des senkrechten Steges größer ist als die Dicke der waagrechten Lasche, sind optimale Voraussetzungen für ein gutes Flächenträgheitsmoment geschaffen. Bei einer besonders bevorzugten Ausführungsform der Erfindung ist vorgesehen, daß der senkrechte Steg an seiner den Rohrflossen nahen Stirnseite kuppenförmig ausgebildet ist. Dadurch kann der Steg durch Bolzenschweißtechnik montiert werden. So wird jede Ausformung der kuppenförmigen Stirnseite des senkrechten Stegs bevorzugt, durch die der Funkenüberschlag beim Bolzenschweißen begünstigt wird. Hierzu ist bei einer zweckmäßigen Ausgestaltung der Vorrichtung vorgesehen, daß die Stirnseite des senkrechten Stegs einen eine Linien- oder Punktauflage bildenden Scheitel aufweist.

Wenn das Halteteil zunächst aus zwei Teilen gefertigt wird, so ist bei einer ersten Ausführungsform der Erfindung der senkrechte Steg an seinem der Rohrflosse fernen Ende gabelförmig ausgebildet. Dadurch kann die waagrechte Lasche zwischen den Gabelarmen des Steges eingefangen werden, wonach zwischen beiden Teilen eine Verklemmung oder Verkeilung zur Wirkung kommen kann, oder beide Teile miteinander verschweißt werden. Die gleiche Wirkung wird erzielt, wenn wie bei einer weiteren Ausführungsform der Erfindung die waagrechte Lasche an ihrem der Rohrflosse nahen Ende gabelförmig ausgebildet ist.

Bei der zuvor genannten ersten Ausführungsform ist bei einer zweckmäßigen Ausgestaltung vorgesehen, daß das der Rohrflosse ferne Ende des senkrechten Stegs einen Einschnitt aufweist, und daß der Einschnitt keilförmig ausgebildet ist. Somit kann der Steg und die Lasche ohne Hilfsmittel gegeneinander ausgerichtet werden. Dies eröffnet einerseits die Möglichkeit, den Steg an den Rohrflossen zu befestigen und danach die Lasche einzukeilen, oder auf diese Art vorzumontieren. Insbesondere dann, wenn die Lasche auf den bereits an der Rohrflosse angeschweißten Steg aufgekeilt wird, kann ein relativ einfach ausgelegtes Werkzeug für die Bolzenschweißtechnik verwendet werden, da die waagrechte Lasche weder räumlich noch durch ihren elektrischen Widerstand die Bolzenverschweißung stören kann. Auch bei der nachfolgenden Verkeilung oder Verklemmung besteht die Möglichkeit, beide Teile miteinander zu verschweißen oder zu verlöten. Gegenüber der ersten Ausführungsform ist bei der zweiten Variante vorgesehen, daß die waagrechte Lasche an ihrem der Rohrflosse nahen Ende einen Einschnitt aufweist, der keilförmig ausgebildet ist.

Bei einer weiteren zweckmäßigen Ausführungsform der Erfindung wird auf ein Verschweißen oder Verlöten der Lasche mit dem Steg verzichtet, wobei hierzu der senkrechte Steg an seinem der Rohrflosse fernen Ende beidseitig sowie oben und unten am oberen und unteren Rand entsprechend der Dicke der waagrechten Lasche voneinander beabstandete Leisten aufweist. Dadurch können beide Teile miteinander verklemmt oder verkeilt werden, wobei ein Kippen der Lasche ausgeschlossen ist, da deren Bewegungsfreiheit durch die als Anschlag wirkenden Leisten eingeschränkt ist bzw. eine Kippbewegung überhaupt nicht möglich wird.

Zur Aufnahme des Haltebolzens ist vorgesehen, daß die waagrechte Lasche von einer vertikal verlaufenden Durchbrechung durchsetzt ist. Bei einer weiteren zweckmäßigen Ausgestaltung ist vorgesehen, daß die Stirnseite des senkrechten Stegs zumindest teilweise mit einer den Funkenschlag beim Bolzenschweißen begünstigenden Schicht versehen ist. Das Bolzen- oder Punktschweißen kann weiterhin dadurch positiv beeinflußt werden, wenn wie bei einer besonders bevorzugten Ausführungsform der Erfindung vorgesehen ist, daß der senkrechte Steg und die waagrechte Lasche aus unterschiedlichen Materialien bestehen. Da die Lasche und der Steg sowohl biegefest als auch unverlierbar miteinander verbunden sind, ist der Einsatz der erfindungsgemäßen Verankerungsvorrichtung auch für die Deckenverkleidung geeignet. Ansonsten sind zweckmäßige Ausgestaltungen der Erfindung Gegenstand von Unteransprüchen.

Anhand der Zeichnung, die besonders bevorzugte Ausführungsformen der Erfindung zeigt, wird diese nun näher beschrieben. Dabei zeigen:
- Figur 1: eine perspektivische Darstellung eines Rohraggregats mit vorgehängter Steinplatte und erfindungsgemäßer Verankerungsvorrichtung
- Figur 2: eine perspektivische Darstellung der erfindungsgemäßen Verankerungsvorrichtung
- Figur 3: eine erste Variante der erfindungsgemäßen Verankerungsvorrichtung in Seitenansicht
- Figur 4: eine Draufsicht auf die Verankerungsvorrichtung nach Figur 3
- Figur 5: eine Stirnansicht der Verankerungsvorrichtung nach Figur 3
- Figur 6: eine weitere Variante der erfindungsgemäßen Verankerungsvorrichtung in einer Seitenansicht
- Figur 7: eine weitere Variante der erfindungsgemäßen Verankerungsvorrichtung in einer Seitenansicht
- Figur 8: eine weitere Variante der erfindungsgemäßen Verankerungsvorrichtung in einer Draufsicht
- Figur 9: eine weitere Variante der erfindungsgemäßen Verankerungsvorrichtung in einer Draufsicht
- Figur 10: eine weitere Variante der erfindungsgemäßen Verankerungsvorrichtung in einer Draufsicht
- Figur 11: eine weitere Ausgestaltung des senkrechten Stegs
- Figur 12: eine alternative Ausgestaltung des Stegs
- Figur 13: eine weitere Variante der erfindungsgemäßen Verankerungsvorrichtung in einer Seitenansicht
- Figur 14: eine Draufsicht auf die Verankerungsvorrichtung nach Figur 13

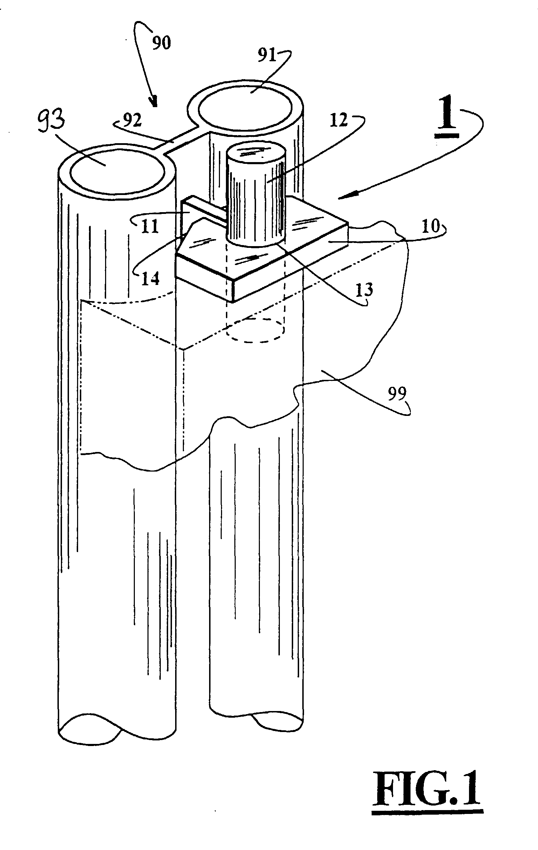

Die Figur 1 zeigt ein mit dem Bezugszeichen 90 bezeichnetes Rohraggregat, wie es üblicherweise an den Begrenzungswänden in einem nicht näher dargestellten Verbrennungsraum anzutreffen ist und beispielsweise zu dampferzeugenden Zwecken dient. Die das Rohraggregat bildenden Rohre 91, 93 sind über sogenannte Rohrflossen 92 miteinander verbunden. Zum Zwecke des sicheren Anbringens einer vor das Rohraggregat 90 vorgehängten feuerfesten Steinplatte 99 ist auf die Rohrflosse 92 ein Halteteil 1 montiert, das aus einem senkrechten Steg 11 und einer waagrechten Lasche 10 besteht, die biegesteif zusammengefügt sind. Zwischen der Steinplatte 99 sowie den neben und über ihr angeordneten weiteren Steinplatten und dem Rohraggregat 90 verbleibt ein nicht dargestellter Spalt, der mit Schutzgas, beispielsweise Luft oder Stickstoff geeigneten Drucks, beaufschlagt ist. Die zwischen den einzelnen Steinplatten bestehenden Fugen sind mit einer feuerfesten Masse ausgefüllt.

In der Steinplatte 99 befindet sich eine senkrechte, im wesentlichen zylindrische Ausnehmung, die zur Aufnahme des unter der Lasche 10 befindlichen Teils des Haltebolzens 12 dient. In der direkt oberhalb der Steinplatte 99 befindlichen. ebenfalls nicht dargestellten Steinplatte befindet sich eine weitere im wesentlichen zylindrische Ausnehmung zur Aufnahme des oberhalb der Lasche 10 verbleibenden Teils des Haltebolzens 12. Die Ausnehmung ist an ihrem offenen Ende seitlich soweit verbreitert, daß in der Verbreiterung der Steinplatte die Lasche 10 Aufnahme finden kann. Damit kann die oberhalb der Steinplatte 99 befindliche Steinplatte direkt auf der Lasche 10 aufruhen und zu der Steinplatte 99 einen so kleinen Abstand halten, wie er für die Verfügung erforderlich ist. Da die Aufnahmen für den Haltebolzen 12 und die Lasche 10 nicht vermörtelt sind, kann im Spalt befindliches Schutzgas die Haltevorrichtung umspülen und damit gegen eventuell eindringende Rauchgase schützen.

Die waagrechte Lasche 10 ist von einer senkrecht verlaufenden Durchbrechung 13, hier eine zylindrische Bohrung, durchsetzt, so daß der in entsprechend ausgeformte Steinplatten 99 eingreifende Haltebolzen 12 eingeschoben werden kann. Der Haltebolzen 12 kann wie hier dargestellt ist, gerade und zylindrisch ausgebildet sein, oder aber auch einen anderen zweckmäßigen Querschnitt besitzen und beispielsweise bogenförmig gekrümmt sein, wobei dann die Aufnahmen in den Steinplatten entsprechend geformt sind. Um die Lasche 10 möglichst nahe an dem Rohraggregat 90 anzuordnen, weist diese an ihrem vorderen Ende beiderseits je eine abgeschrägte Kante 14, 15 auf.

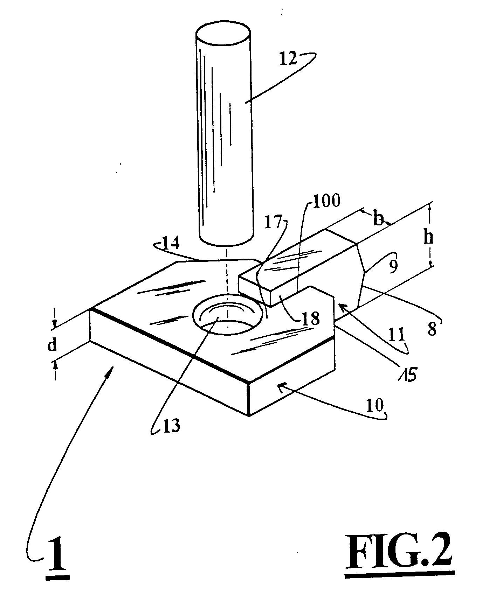

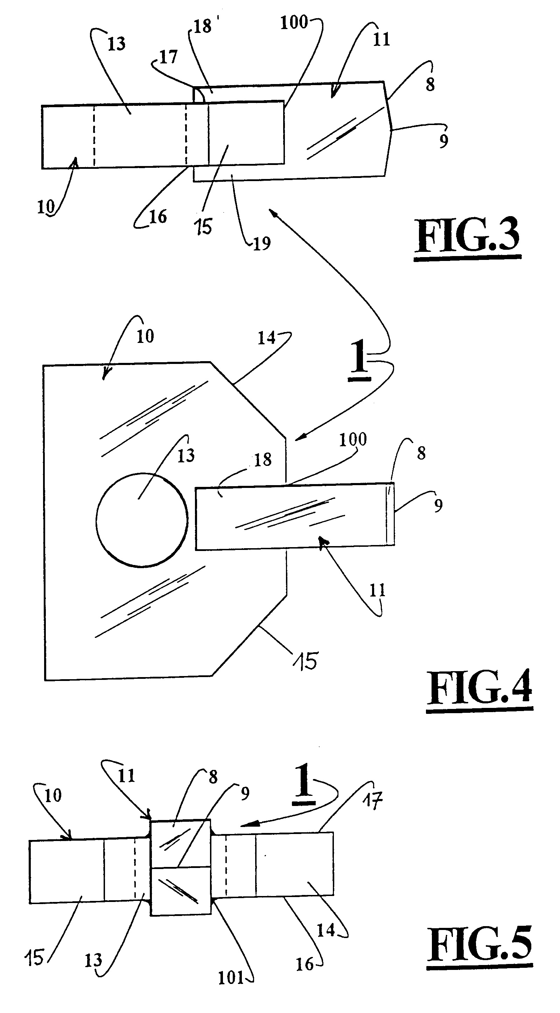

Das in Figur 1 dargestellte Halteteil 1 ist in den Figuren 2-5 im einzelnen wiedergegeben. Die waagrechte Lasche 10 besteht aus einer im wesentlichen rechteckigen Lasche 10, die an ihrer zum senkrechten Steg 11 weisenden Seite mit abgeschrägten Kanten 14, 15 versehen ist. Zum Zwecke der Aufnahme des Haltebolzens 12 ist die Lasche 10 in ihrem Zentrum von einer zylindrischen Bohrung 13 durchsetzt. Der senkrechte Steg 11 ist gabelförmig ausgebildet, so daß die Lasche 10 in einen Einschnitt 100 des Steges 11 eingeführt werden kann und zwischen den Armen 18, 19 des Steges 11 zu liegen kommt, wobei sowohl die Unterseite 16 als auch die Oberseite 17 der Lasche 10 dicht an den Innenseiten der Arme 18, 19 anliegen. Sodann werden Lasche 10 und Steg 11 miteinander verschweißt, indem an den dazu geeigneten Stellen eine entsprechende Schweißnaht 101 gezogen wird. Die der Lasche 10 ferne Stirnfläche 8 des senkrechten Stegs 11 ist annähernd keilförmig ausgebildet, wobei am Scheitel 9 beste Voraussetzungen für die Bolzenschweißtechnik geschaffen sind, mittels der das Halteteil 1 an der Rohrflosse 92 des Rohraggregats befestigt werden kann.

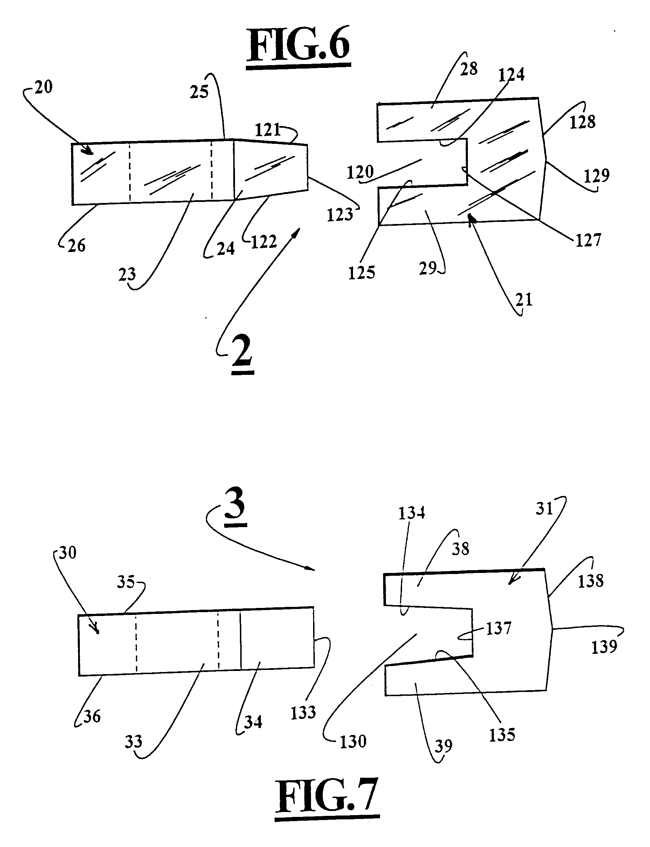

Die Figur 6 zeigt eine Variante des mit 2 bezeichneten Halteteils. Der senkrechte Steg 21 sieht einen etwa rechteckigen, zur Lasche 20 hin offenen Einschnitt 120 vor, in den die Lasche 20 eingetrieben wird. Hierzu ist sowohl die Unterseite 26 als auch die Oberseite 25 der Lasche 20 mit je einer keilförmigen Abschrägung 121,122 versehen, die sich in etwa über den Bereich der abgeschrägten Kante 24 bis hin zur Stirnkante 123 erstrecken. Die Lasche 20 wird soweit zwischen die Arme 28, 29 des Steges 21 eingetrieben, bis die Stirnseite 123 der Lasche 20 an der hinteren Begrenzungswand 127 des Einschnittes 120 anliegt, wobei die Innenseiten 124,125 der Arme 28, 29 eine vertikale Begrenzung für die Lasche 20 bilden und mit ihren freien Enden in etwa am Rande der die Lasche 20 durchsetzenden Durchbrechung 23 angrenzen. Die Stirnfläche 128 des Steges 21 ist wiederum für das Bolzenschweißen vorbereitet, wobei diese keilförmig mit einem Scheitel 129 ausgebildet ist.

Die Figur 7 zeigt eine Variante des mit 3 bezeichneten Halteteils, bei dem der Einschnitt 130 des senkrechten Stegs 31 keilförmig ausgebildet ist. Die waagrechte Lasche 30 ist hierbei als ebene Platte ausgebildet, deren Kontur von deren Oberseite 35, Unterseite 36, sowie von den Stirnseiten 133 und den abgeschrägten Kanten 34 begrenzt ist. Das Zentrum der Lasche 30 ist von der Durchbrechung 33 für den nicht näher dargestellten Haltebolzen durchsetzt. Die Lasche 30 wird in den Einschnitt 130 des Steges 31 eingeschlagen, bis die vordere Stirnseite 133 an der hinteren Begrenzungswand 137 des Einschnitts 130 zum Anschlag kommt, wobei sich die Unterseite 36 und die Oberseite 35 der Lasche 30 mit den inneren Seitenflächen 134,135 der gegenüberliegenden Arme 38, 39 des Einschnittes 130 verkeilen. Die Stirnfläche 138 des Steges 31 ist wiederum mit einem Scheitel 139 versehen.

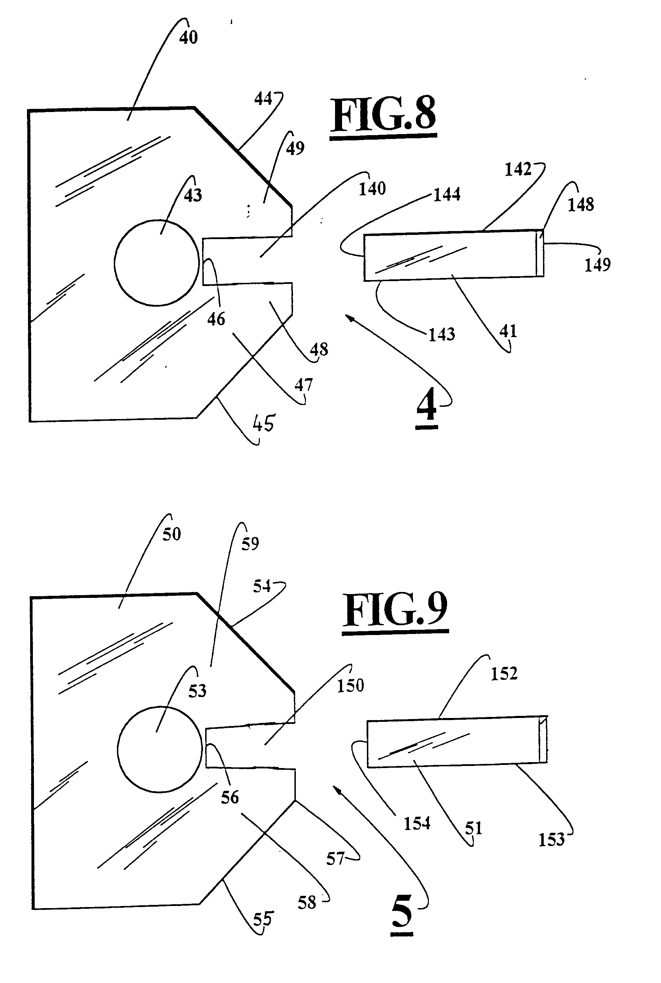

Die Figur 8 zeigt eine Variante des mit 4 bezeichneten Halteteils, bei der die Lasche 40 einen Einschnitt 140 besitzt. Die Lasche 40 ist auch hier plattenförmig ausgebildet, deren zum Steg 41 weisende Seite durch die abgeschrägten Kanten 44, 45 als trapezförmiger Ansatz ausgebildet ist. Der Einschnitt 140 wird durch die Arme 48, 49 begrenzt. Beim Einsetzen des senkrechten Steges 41 in die Lasche 40 gelangt seine Stirnseite 144 bis an die hintere Begrenzungswand 46 des Einschnittes 140, wobei die Oberseite 142, und die Unterseite 143 des Steges 41 an den Einschnitt 140 zur Anlage kommen. Mittels der Durchbrechung 43 ist die Lasche 40 zur Aufnahme des in Figur 1 und 2 dargestellten Haltebolzens vorbereitet. Auch in dieser Variante ist der Steg 41 mit einer in einem Scheitel 149 auslaufenden, kuppenförmigen Stirnfläche 148 ausgebildet.

Die Figur 9 zeigt eine weitere Variante eines mit 5 bezeichneten Halteteils. Zwischen Lasche 50 und Steg 51 ist erneut die Möglichkeit einer Verkeilung oder Verklemmung geschaffen, indem die Lasche 50 einen keilförmigen Einschnitt 150 besitzt, in den der quaderförmige Steg 51 eingeschlagen wird, bis dieser mit seiner der Lasche 50 nahen Stirnseite 154 an der hinteren Begrenzungswand 56 des Einschnitts 150 zum Anschlag kommt, wobei sich die Seitenflächen 152,153 des Steges 51 mit den inneren Seitenflächen des Einschnitts 150 verkeilen. Danach ist der Steg 51 zwischen den Armen 58,59 der Lasche 50 eingefangen. Im übrigen besitzt die Lasche 50 mit ihren abgeschrägten Kanten 54, 55 und der zur Aufnahme des Haltebolzens geeigneten Durchbrechung 53 die gleiche Formgebung wie in den zuvor beschriebenen Ausführungsformen.

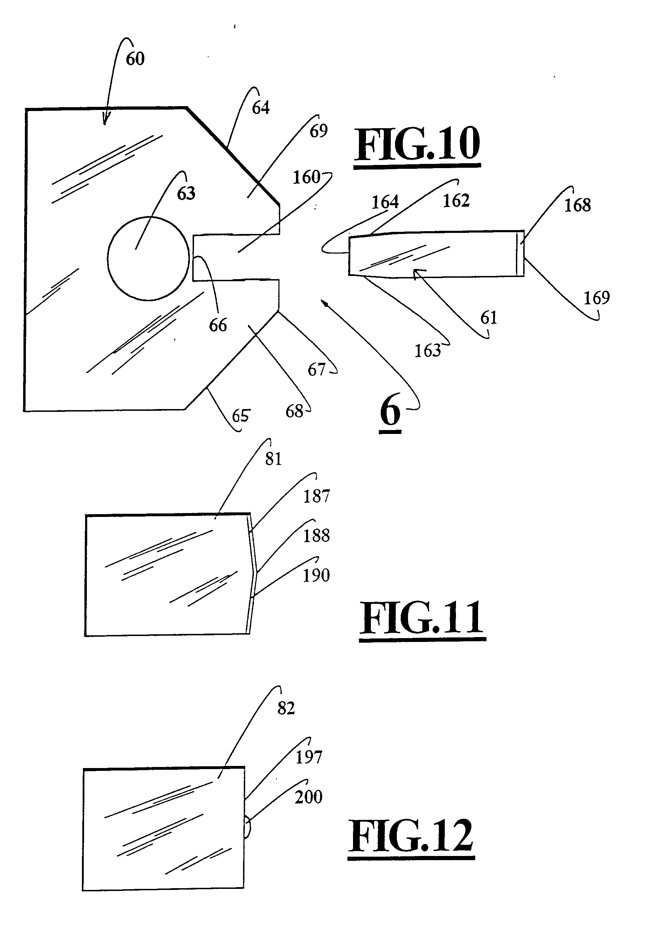

Die Figur 10 zeigt eine Variante des Halteteils 6, bei der die Lasche 60 einen etwa rechteckigen zum Steg 61 hin offenen Einschnitt 160 besitzt, der bis nahe an den Rand der Durchbrechung 63 reicht. Wenn der mit seinen keilförmigen Seitenflächen 162 und 163 ausgebildete Steg 61 und die Lasche 60 miteinander verklemmt werden, kommt der Steg 61 mit seiner der Lasche 60 nahen Stirnseite 164 an der hinteren Begrenzungswand 66 des Einschnitts 160 zum Anschlag und liegt an den gegenüberliegenden Innenflächen des Einschnittes 160 an. Die Lasche 60 mit ihren abgeschrägten Kanten 64, 65 als auch der Steg mit seiner den Scheitel 169 aufweisenden keilförmigen Stirnfläche 168 besitzen ansonsten die Gestaltung der zuvor beschriebenen Ausführungsformen.

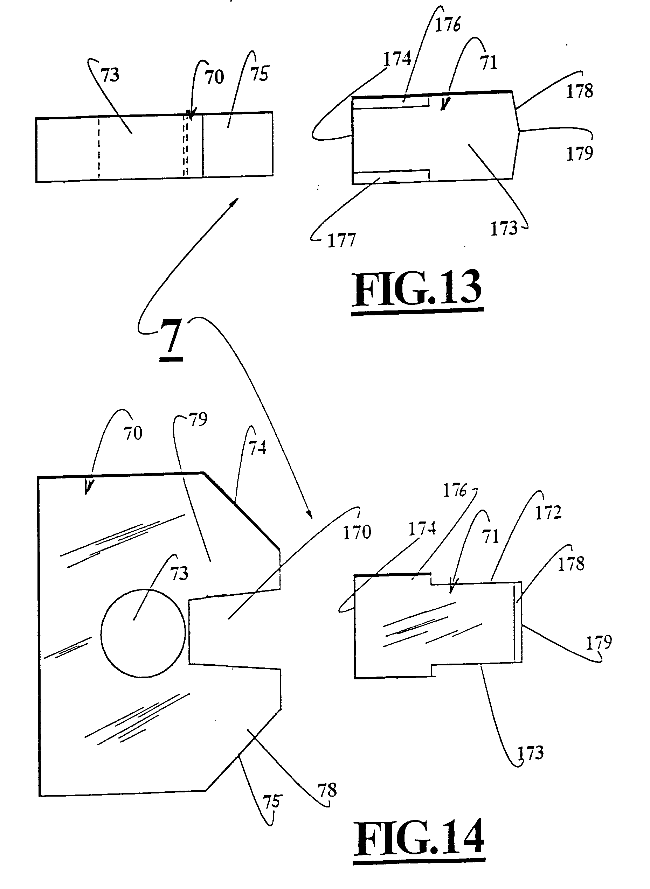

Während die bisher beschriebenen Varianten dazu vorbereitet sind, entweder schon zu Beginn aus einem Teil zu bestehen oder nach dem Zusammenführen und Verkeilen miteinander verschweißt, verlötet oder kaltverkeilt zu werden um ein biegefestes Halteteil zu bilden, ist das Halteteil 7 nach den Figuren 13 und 14 so gestaltet, daß ein Verbinden durch Schweißen oder Löten nicht mehr notwendig ist. Hierzu ist die Lasche 70 erneut als ebene Platte ausgebildet und mit abgeschrägten Kanten 74, 75 versehen. Im Zentrum der Lasche 70 ist die zur Aufnahme des Haltebolzens geeignete Durchbrechung 73 ausgebildet. Die Lasche 70 besitzt einen zum Steg 71 hin offenen Einschnitt 170. Der Einschnitt 170 ist zur Durchbrechung 73 hin keilförmig ausgebildet. Hier sei angemerkt, daß die keilförmige Gestalt des Halteteils 7 wie bereits bei den vorangegangenen Varianten auch auf den Steg 71 übertragen werden kann. Der Steg 71 ist durch seine zum Scheitel 179 hin geneigte Stirnfläche 178 für das Bolzenschweißen vorbereitet. Die Lasche 70 wird mit ihrem Einschnitt 170 voran auf den senkrecht an der Rohrflosse ausgerichteten Steg 71 geschlagen, so daß der Einschnitt 170 mit seinen Armen 78,79 die Seitenflächen 172,173 des Steges 71 einschließt und die Stirnwand 174 des Stegs 71 an der inneren Begrenzungswand des Einschnittes 170 zum Anschlag kommt. In der waagrechten Ebene ist die Lasche 70 mit dem Steg 71 verkeilt. Vertikales Verkippen der Lasche 70 wird durch die am Steg 71 oben und unten angeformten Leisten 176, 177 verhindert, da die Oberseite der Lasche 70 und deren Unterseite an Leisten 176, 177 anliegen.

Figur 11 zeigt eine Variante des senkrechten Stegs 81, dessen Stirnseite 187 mit einer den Funkenüberschlag begünstigenden Schicht 190 belegt ist, die erneut eine kuppenförmige, in einen Scheitel 188 übergehenden Gestalt besitzt.

Die Figur 12 verdeutlicht eine Ausgestaltung eines senkrechten Steges 82, dessen Stirnfläche 197 selbst nicht kuppenförmig ausgebildet, sondern zum Zwecke der Begünstigung eines Funkenüberschlags bei der Bolzenschweißtechnik mit einer entsprechend geformten Nase 200 versehen ist.

## Patentansprüche

1. Verankerungsvorrichtung für Stahlrohraggregate abdeckende Steinplatten, bestehend aus einem an der die Stahlrohre verbindenden Rohrflosse befestigbaren Halteteil und einem das Halteteil durchsetzenden, in die Steinplatten eingreifenden Haltebolzen, dadurch gekennzeichnet, daß das Halteteil (1,2,3,4,5,6 oder 7) aus einem an der Rohrflosse (92) befestigbaren senkrechten Steg (11,21,31,41,51,61,71,81 oder 82) und einer an dem der Rohrflosse (92) fernen Ende des senkrechten Stegs (11,21,31,41,51,61,71,81 oder 82) angeordneten und den Haltebolzen (12) aufnehmenden waagrechten Lasche (10,20,30,40,50,60 oder 70) besteht, wobei der senkrechte Steg (11,21,31,41,51,61,71,81 oder 82) und die waagrechte Lasche (10,20,30,40,50,60 oder 70) biegefest miteinander ausgebildet oder verbunden sind.

2. Verankerungsvorrichtung nach Anspruch 1, dadurch gekennzeichnet, daß das Halteteil (1) einstückig ausgebildet ist.

3. Verankerungsvorrichtung nach Anspruch 1, dadurch gekennzeichnet, daß der senkrechte Steg (11) und die waagrechte Lasche (10) durch Verschweißung zusammengefügt sind.

4. Verankerungsvorrichtung nach Anspruch 1, dadurch gekennzeichnet, daß der senkrechte Steg (21,31,41,51,61,71,81 oder 82) und die waagrechte Lasche (20,30,40,50,60 oder 70) durch Verklemmung oder Verkeilung zusammengefügt sind.

5. Verankerungsvorrichtung nach einem der Ansprüche 1 - 4, dadurch gekennzeichnet, daß die Höhe 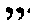 h" des senkrechten Stegs (11,21,31,41,51,61,71,81 oder 82) größer ist als dessen Breite 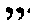 b".

6. Verankerungsvorrichtung nach mindestens einem der vorstehenden Ansprüche, dadurch gekennzeichnet, daß die höhe 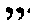 h" des senkrechten Steges (11,21,31,41,51,61,71,81 oder 82) größer ist als die Dicke 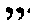 d" der waagrechten Lasche (10,20,30,40,50,60 oder 70).

7. Verankerungsvorrichtung nach mindestens einem der vorstehenden Ansprüche, dadurch gekennzeichnet, däß der senkrechte Steg (11,21,31,41,51,61,71,81) an seiner den Rohrflossen (92) nahen Stirnseite (8,128,138,148,158,168,178) kuppenförmig ausgebildet ist.

8. Verankerungsvorrichtung nach Anspruch 7, dadurch gekennzeichnet, daß die kuppenförmige Stirnseite (8,128,138,148,158,168,178) des senkrechten Stegs (11,21,31,41,51,61,71,81) durch eine den Funkenüberschlag beim Bolzenschweißen begünstigende Ausformung gebildet ist.

9. Verankerungsvorrichtung nach Anspruch 7 oder 8, dadurch gekennzeichnet, daß die Stirnseite (8,128,138,148,158,168,178) einen des senkrechten Stegs (11,21,31,41,51,61,71,81) eine Lininien- oder Punktauflage bildenden Scheitel (9,129,139,149,159,169,179,188) aufweist.

10. Verankerungsvorrichtung nach mindestens einem der vorstehenden Ansprüche, dadurch gekennzeichnet, daß der senkrechte Steg (11,21,31) an seinem der Rohrflosse (92) fernen Ende gabelförmig ausgebildet ist.

11. Verankerungsvorrichtung nach mindestens einem der Ansprüche 1-10, dadurch gekennzeichnet, daß die waagrechte Lasche (40,50,60,70) an ihrem der Rohrflosse (92) nahen Ende gabelförmig ausgebildet ist.

12. Verankerungsvorrichtung nach Anspruch 10, dadurch gekennzeichnet, daß das der Rohrflosse (92) ferne Ende des senkrechten Stegs (11,21,31) einen Einschnitt (100,120,130) aufweist.

13. Verankerungsvorrichtung nach Anspruch 12, dadurch gekennzeichnet, daß der Einschnitt (130) keilförmig ausgebildet ist.

14. Verankerungsvorrichtung nach Anspruch 11, dadurch gekennzeichnet, daß die waagrechte Lasche (40,50,60,70) an ihrem der Rohrflosse (92) nahen Ende einen Einschnitt (140,150,160,170) aufweist.

15. Verankerungsvorrichtung nach Anspruch 14, dadurch gekennzeichnet, daß der Einschnitt (150,170) keilförmig ausgebildet ist.

16. Verankerungsvorrichtung nach mindestens einem der vorstehenden Ansprüche, dadurch gekennzeichnet, daß der senkrechte Steg (71) an seinem der Rohrflosse (92) fernen Ende beidseitig sowie oben und unten am oberen und unteren Rand entsprechend der Dicke 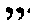 d" der waagrechten Lasche (70) voneinander beabstandete Leisten (177) aufweist.

17. Verankerungsvorrichtung nach mindestens einem der vorstehenden Ansprüche, dadurch gekennzeichnet, daß die waagrechte Lasche (10,20,30,40,50,60 oder 70) von einer vertikal verlaufenden Durchbrechung (13,23,33,43,53,63,73) durchsetzt ist.

18. Verankerungsvorrichtung nach einem der Ansprüche 1-17, dadurch gekennzeichnet, daß die Stirnseite (8,128,138,148,158,168,178,187 oder 197) des senkrechten Stegs (11,21,31,41,51,61,71,81 oder 82) zumindest teilweise mit einer den Funkenschlag beim Bolzenschweißen begünstigenden Schicht (200) versehen ist.

19. Verankerungsvorrichtung nach mindesten einem der vorstehenden Ansprüche, dadurch gekennzeichnet, daß der senkrechte Steg (11,21,31,41,51,61,71,81 oder 82) und die waagrechte Lasche (10,20,30,40,50,60 oder 70) aus unterschiedlichen Materialien bestehen.
